# EUROPEAN PATENT SPECIFICATION

(11) **EP 3 546 191 B1**
(45) Date of publication and mention of the grant of the patent: **28.04.2021**
(21) Application number: 19163939.2
(22) Date of filing: 20.03.2019
(51) Int. Cl.: B29C 45/83

(54) **INJECTION MOLDING MACHINE**
SPRITZGIESSMASCHINE
MACHINE DE MOULAGE À INJECTION

(30) Priority: 30.03.2018 JP 2018068366
(43) Date of publication of application: 02.10.2019
(73) Proprietor: Sumitomo Heavy Industries, Ltd., Tokyo 141-6025 (JP)
(72) Inventor: MOROZUMI, Tomohito, Chiba-shi, Chiba, 263-0001, (JP); KOBAYASHI, Akihisa, Chiba-shi, Chiba, 263-0001, (JP); TANAKA, Yoshitada, Chiba-shi, Chiba, 263-0001, (JP); ITO, Yosuke, Chiba-shi, Chiba, 263-0001, (JP)
(74) Representative: Louis Pöhlau Lohrentz

(56) References cited:
- WO-A1-2005/077639
- DE-A1-102008 024 514
- JP-A- H04 239 583
- JP-A- H10 315 285
- JP-A- 2001 246 627
- US-A1- 2008 063 744

## Description

### BACKGROUND OF THE INVENTION

### Field of the Invention

The present invention relates to an injection molding machine.

### Description of Related Art

Japanese Unexamined Patent Publication No. 10-315285 discloses a mold clamping unit including a crosshead which is guided by a guide bar and is reciprocated by a ball screw. Japanese Patent Application JP H04 239583 A discloses a production of a tie-bar grease seal of a injection molding machine and an apparatus therefor. Japanese Patent Application JP 2001 246627 A discloses a platen, a tie bar disposed through a through hole formed in the platen, a bearing disposed in the through hole and supporting the tie bar and a mold clamping device comprising an annular seal disposed on an end surface of the platen. US Patent Application US 2008/063744 A1 discloses a circulating lubrication oil passage structure of a toggle mechanism of an injection molding machine.
International Patent Application WO 2005/077639 A1 discloses a mold closing unit of an injection molding machine comprising lever joints and a lubricant supply and use of the lubricating device.
German Patent Application DE 10 2008 024 514 A1 discloses a lubricating device.

### SUMMARY OF THE INVENTION

Meanwhile, in the crosshead which is guided by a guide bar and reciprocates, a bush is provided in an insertion portion into which the guide bar is inserted. Moreover, a lubricant is supplied to a gap between the bush and the guide bar. Accordingly, in an injection molding machine of the related art, when a crosshead moves forward or rearward, scattering or sagging of the lubricant occurs, and thus, there is a concern that the injection molding machine is contaminated by the lubricant.

Accordingly, an object of the present invention is to provide an injection molding machine capable of preventing contamination of the machine caused by the scattering of the lubricant.

According to an aspect of an embodiment, there is provided an injection molding machine, including: a crosshead which is driven by a linear motion mechanism; a bush which is disposed in a guide hole provided in a guide portion of the crosshead; a guide bar which is inserted into a bearing hole of the bush and guides a linear motion of the crosshead; seal blocks which have an insertion hole into which the guide bar is inserted and are disposed on both end surfaces of the guide portion; and a seal member which is disposed in a seal groove formed on an inner peripheral surface of the insertion hole of the seal blocks and seals a gap between the inner peripheral surface of the insertion hole of the seal block and an outer peripheral surface of the guide bar.

According to the present invention, it is possible to provide the injection molding machine which prevents contamination of the machine caused by scattering of a lubricant.

### BRIEF DESCRIPTION OF THE DRAWINGS

Fig. 1 is a view showing a state when a mold opening of an injection molding machine according to a first embodiment is completed.
Fig. 2 is a view showing a state when a mold of the injection molding machine according to the first embodiment is clamped.
Fig. 3 is a perspective view showing a periphery of a crosshead in a toggle mechanism provided in the injection molding machine according to the first embodiment.
Fig. 4 is a horizontal sectional view showing the periphery of the crosshead in the toggle mechanism provided in the injection molding machine according to the first embodiment.
Figs. 5A and 5B are vertical sectional views showing the periphery of the crosshead in the toggle mechanism provided in the injection molding machine according to the first embodiment.
Fig. 6 is a sectional view explaining a lubrication structure between a bush of the crosshead and a guide bar in the injection molding machine according to the first embodiment.
Figs. 7A and 7B are perspective sectional views explaining the lubrication structure between the bush of the crosshead and the guide bar in the injection molding machine according to the first embodiment.
Figs. 8A and 8B are sectional views explaining a lubrication structure between a bush of a crosshead and a guide bar in an injection molding machine according to a second embodiment.
Fig. 9 is a sectional view explaining a lubrication structure between a bush of a crosshead and a guide bar in an injection molding machine according to a third embodiment.
Fig. 10 is a horizontal sectional view of an ejector unit provided in the injection molding machine according to a fourth embodiment.
Fig. 11 is a sectional view showing a periphery of a crosshead in the ejector unit provided in the injection molding machine according to the fourth embodiment.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### <<First Embodiment>>

### (Injection Molding Machine)

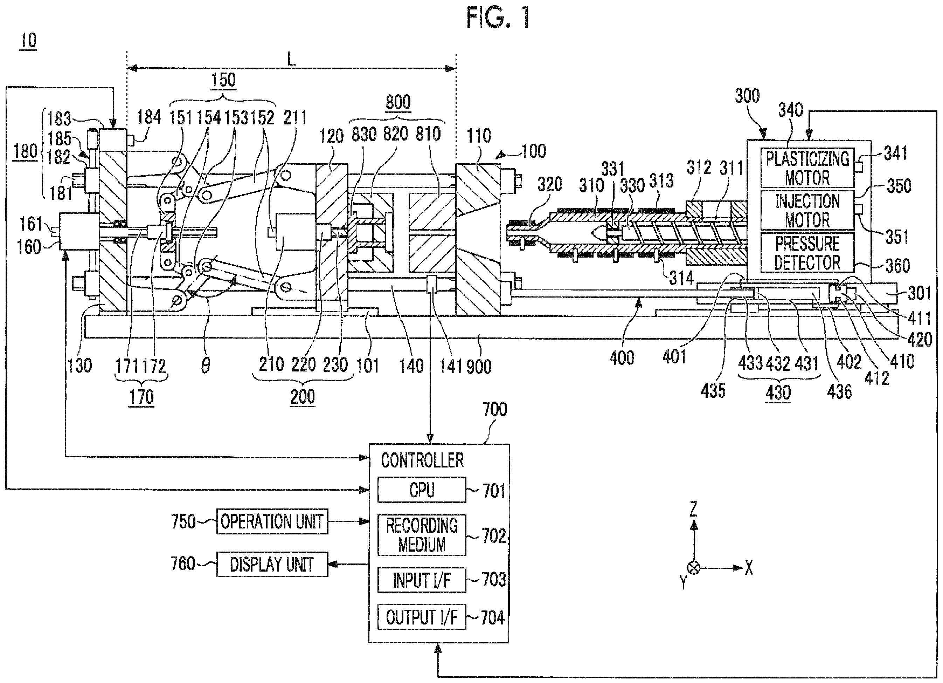

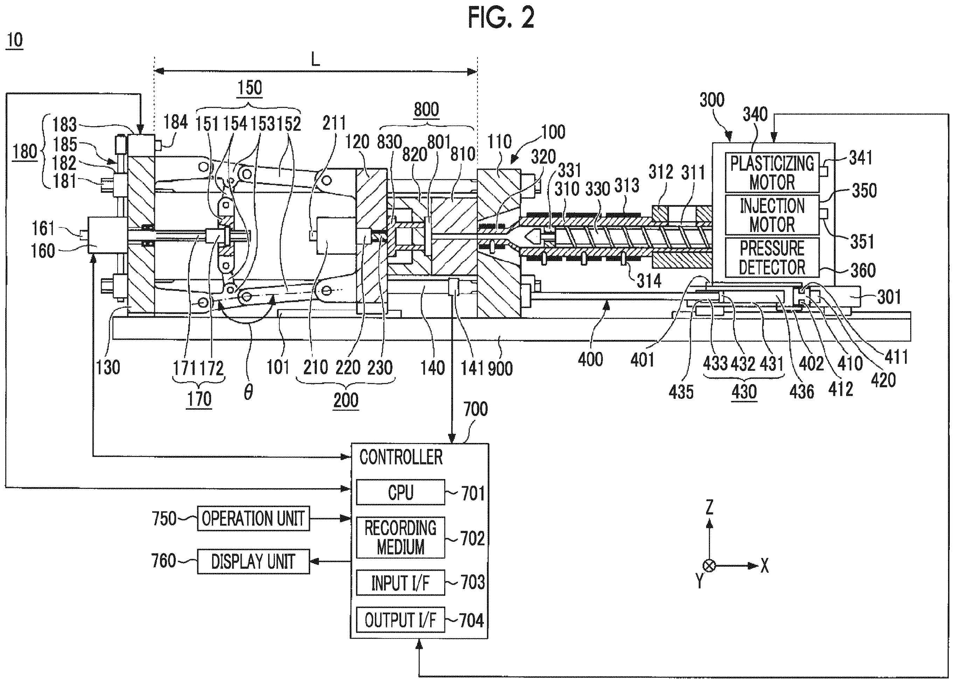

Fig. 1 is a view showing a state when a mold opening of an injection molding machine according to a first embodiment is completed. Fig. 2 is a view showing a state when a mold of the injection molding machine according to the first embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 include the mold clamping unit 100, an ejector unit 200, an injection unit 300, a movement unit 400, a controller 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, a speed or positions (including mold opening/closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position maybe the same as the mold clamping position . In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 are used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motor 183 may be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The back flow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the controller 700. The pressure detector 360 is provided on a transmission path of the force between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detectedusing aplasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw speed detector which detects the speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. In the filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process may be performed of the cooling process of the previous molding cycle, and in this case, the mold closing cycle may be performed at an initial stage of the molding cycle. In addition, the filling process maybe started during the mold closing process. Moreover, the ejection process may be started during the mold opening process. In a case where an on/off valve which opens and closes the flow path of the nozzle 320 is provided, the mold opening process may be performed during the plasticizing process. Accordingly, even when the mold opening process starts during the plasticizing process, if the on/off valve closes the flow path of the nozzle 320, the molding material does not leak from the nozzle 320.

The controller 700 is connected to an operation unit 750 or the display unit 760. The operation unit 750 receives an input operation from a user and outputs a signal corresponding to the input operation to the controller 700. The display unit 760 displays an operation screen corresponding to the input operation of the operation unit 750 under the control of the controller 700.

The operation screen is used for the setting of the injection molding machine 10 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### <<Crosshead of Toggle Mechanism>>

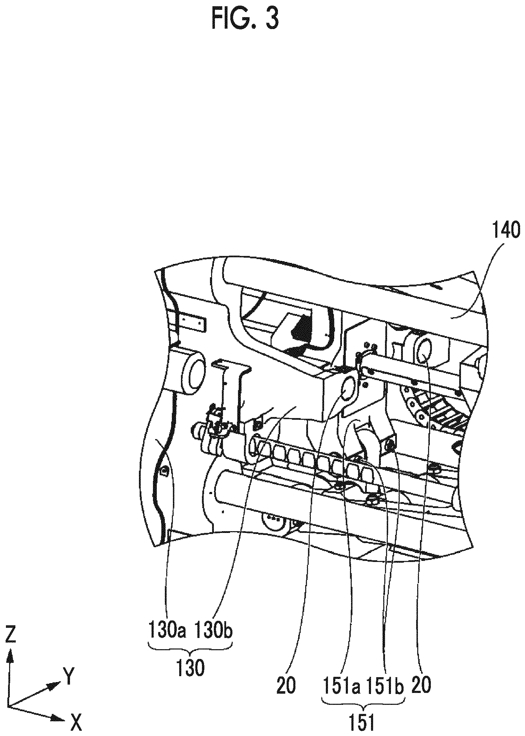

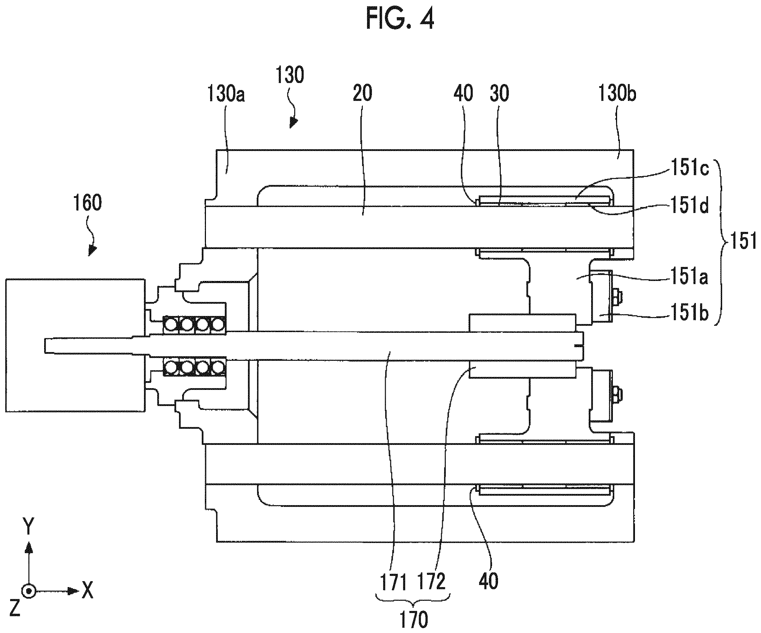

Next, a configuration which moves the crosshead 151 of the toggle mechanism 150 forward or rearward will be described with reference to Figs. 3 and 4. Fig. 3 is a perspective view showing a periphery of the crosshead 151 in the toggle mechanism 150 provided in the injection molding machine 10 according to the first embodiment. Fig. 4 is a horizontal sectional view showing the periphery of the crosshead 151 in the toggle mechanism 150 provided in the injection molding machine 10 according to the first embodiment.

The mold clamping unit 100 includes a guide bar 20 which guides the crosshead 151. A guide direction is the X direction. In order to suppress deflection of the guide bar 20, axial both end portions of the guide bar 20 are fixed to a toggle support 130 or the like.

As shown in Fig. 4, the toggle support 130 includes a toggle support body portion 130a and an arm portion 130b which extends forward from the toggle support body portion 130a and is bent in the Y direction on the way. The toggle support body portion 130a and the arm portion 130b are integrally molded with each other by casting or the like. A rear end portion of the guide bar 20 is fixed to the toggle support body portion 130a and a front end portion of the guide bar 20 is fixed to a distal end portion of the arm portion 130b.

The toggle support body portion 130a has a plate-shaped portion which is formed in an approximately rectangular shape when viewed in the X direction. The plate-shaped portion includes a through-hole, into which the screw shaft 171 of the motion conversion mechanism 170 is inserted, at a center of the plate-shaped portion. Moreover, the toggle support body portion 130a may further include a tubular portion which protrudes in one direction (front side_) in the X direction from an outer peripheral edge portion of the plate-shaped portion, in addition to the plate-shaped portion. The tubular portion is formed in a rectangular frame shape when viewed in the X direction and a space in which the crosshead 151 moves is formed inside the tubular portion.

A pair of arm portions 130b is provided with a gap therebetween in the Y direction at a center portion of a surface (front surface) of the toggle support body portion 130a facing the movable platen 120 in the Z direction . The pair of arm portions 130b is provided on both end portions of the toggle support body portion 130a in the Y direction. The pair of arm portions 130b extends in one direction (forward) in the X direction from the toggle support body portion 130a, is bent inward to each other in the Y direction on the way, and holds the front end portions of a pair of guide bars 20 on distal end portions of the arm portions 130b. A rear end portion of each guide bar 20 is held by the toggle support body portion 130a. For example, each guide bar 20 is formed in a columnar shape and extends in the X direction.

The crosshead 151 includes a main body portion 151a to which the motion conversion mechanism 170 is attached, a link coupling portion 151b which extends in the Z direction from the main body portion 151a and to which the third link 154 is oscillatingly coupled, and a guide portion 151c which extends in the Y direction from the main body portion 151a and into which the guide bar 20 is inserted. The main body portion 151a, the link coupling portion 151b, and the guide portion 151c are integrally molded with each other by casting or the like.

The motion conversion mechanism 170 is attached to the main body portion 151a. For example, the screw shaft 171 is fixed to the main body portion 151a. For example, the main body portion 151a is formed in a plate shape perpendicular to the X direction and is formed in a rectangular shape when viewed in the X direction. When viewed in the X direction, the motion conversion mechanism 170 is attached to a center portion of the main body portion 151a.

As shown in Fig. 3, the link coupling portion 151b protrudes in the Z direction from the main body portion 151a. The third link 154 is oscillatingly attached to a distal end portion of the link coupling portion 151b by a pin or the like. The link coupling portions 151b may be provided on both side in the Z direction such that the main body portion 151a is interposed therebetween.

The link coupling portion 151b has a plurality of link attachment plates perpendicular to the Y direction with gaps therebetween in the Y direction. Each link attachment plate extends in the Z direction from both end surfaces of the main body portion 151a in the Z direction. A through-hole penetrating the link attachment plate in the Y direction is formed on a distal end portion of each link attachment plate. A pin is inserted into the through-hole, and thus, the third link 154 is oscillatingly coupled to the link coupling portion 151b via the pin.

The guide portion 151c is formed in a tubular shape to extend in the X direction, and as shown in Fig. 4, has a guide hole 151d into which the guide bar 20 is inserted, and slides along the guide bar 20. The guide portions 151c may be provided on both sides in the Y direction such that the main body portion 151a is interposed therebetween. The guide portion 151c is provided at a center portion in the Z direction of both end surfaces of the main body portion 151a in the Y direction.

### <<Lubrication Structure in Crosshead>>

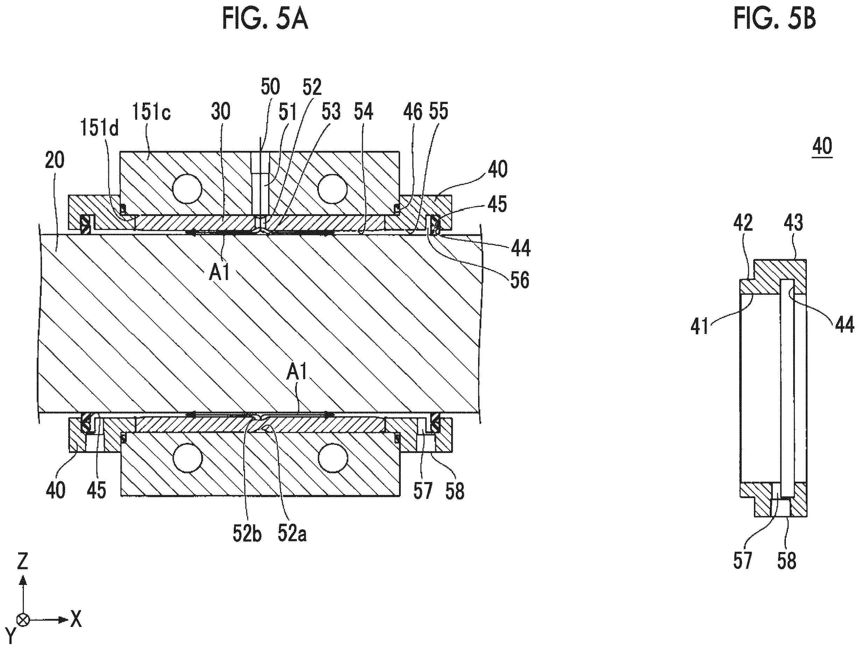

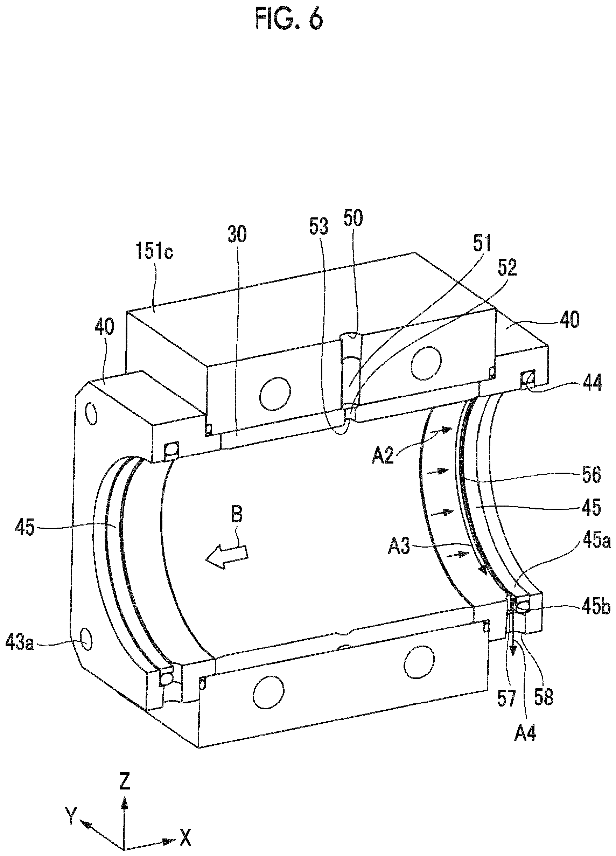

As described above, the crosshead 151 is configured to be guided by the guide bars 20 and to be movable forward or rearward by the motion conversion mechanism 170. Next, a lubrication structure in sliding surfaces of the crosshead 151 and the guide bar 20 will be described with reference to Figs. 5A, 5B, and 6. Fig. 5A is a vertical sectional view showing a periphery of the crosshead 151 and the guide bar 20 in the injection molding machine 10 according to the first embodiment. Fig. 5B is a sectional view of a seal block 40. Fig. 6 is a perspective sectional view explaining a flow of a lubricant in a lubrication structure between a bush 30 of the crosshead 151 and the guide bar 20.

As shown in Fig. 5A, guide hole 151d is formed in the guide portion 151c of the crosshead 151. The bush 30 is press-fitted into the guide hole 151d. The guide bar 20 is inserted into the bearing hole of the bush 30, and an inner peripheral surface of the bush 30 and an outer peripheral surface of the guide bar 20 become sliding surfaces. A bearing gap 54 to which the lubricant is supplied is formed between the inner peripheral surface of the bush 30 and the outer peripheral surface of the guide bar 20.

The guide portion 151c of the crosshead 151 is provided with a first supply path 51 which communicates with the inner peripheral surface of the guide hole 151d from a supply connection port 50 provided on an upper outer peripheral surface of the guide portion 151c. In addition, the bush 30 is provided with a second supply path 52 which communicates from the outer peripheral surface of the bush 30 to the inner peripheral surface thereof. The bush 30 is disposed such that the first supply path 51 and the second supply path 52 communicate with each other. The second supply path 52 is open at a supply path opening portion 53 provided on the inner peripheral surface of the bush 30. In addition, a ring-shaped concave groove 52a is formed on the outer peripheral surface side of the bush 30. Moreover, a ring-shaped concave groove 52b is formed on the inner peripheral surface side of the bush 30, and thus, the lubricant supplied from the supply path opening portion 53 easily flows in a circumferential direction of the guide bar 20 in the concave groove 52b.

In addition, in Figs. 5A, one bush 30 is disposed with respect to one guide hole 151d. However, the present invention is not limited to this. Two bushes may be press-fitted from both sides of the guide hole 151d with respect to one guide hole 151d, respectively. In this configuration, a gap formed between the two bushes can be set to the second supply path 52.

The seal blocks 40 respectively having seal rings 45 are disposed on both end surfaces of the guide portion 151c of the crosshead 151.

Here, as shown in Fig. 5B, the seal block 40 includes an insertion hole 41 into which the guide bar 20 is inserted, an insertion portion 42, a flange portion 43, a seal groove 44, a collection path 57, and a collection connection port 58.

The guide bar 20 is inserted into the insertion hole 41. Accordingly, a bearing gap 55 to which the lubricant is supplied is formed between an inner peripheral surface of the insertion hole 41 of the seal block 40 and an outer peripheral surface of the guide bar 20. Moreover, an inner diameter of the insertion hole 41 of the seal block 40 may be larger than an inner diameter of the bearing hole of the bush 30. The insertion portion 42 is inserted into the guide hole 151d of the crosshead 151. The flange portion 43 is provided with an attachment hole 43a (refer to Fig. 6) and the seal block 40 is fixed to the guide portion 151c of the crosshead 151 by a bolt or the like.

In addition, the seal groove 44 which is a ring-shaped concave groove for disposing the seal ring 45 is formed on the inner peripheral surface of the insertion hole 41. As shown in Fig. 5A, a seal surface of the seal ring 45 is in contact with the outer peripheral surface of the guide bar 20 to perform sealing, and thus, the lubricant is prevented from leaking from the gap between the seal block 40 and the guide bar 20.

Here, when the seal ring 45 is disposed in the seal groove 44, a gap is provided between a side surface of the seal groove 44 and a side surface of the seal ring 45. That is, in a state where the seal ring 45 is disposed in the seal groove 44, a concave groove configured of a side surface of the seal groove 44 on the guide portion 151c side, a cylindrical bottom surface of the seal groove 44, and a side surface of the seal ring 45 on the guide portion 151c side is formed, and the concave groove is referred to as a collection groove 56. In other words, the collection groove 56 is a ring-shaped concave groove which is formed on the guide portion 151c side from the seal ring 45. The collection groove 56 is formed in a portion of the seal groove 44. Accordingly, when viewed in an axial direction of the guide bar 20, the seal ring 45, the collection groove 56, the bearing gap 54, the supply path opening portion 53, the bearing gap 54, the collection groove 56, and the seal ring 45 are disposed in this order.

In addition, an upper side of the collection path 57 extending downward communicates with the collection groove 56, in other words, communicates with the guide portion 151c side of the seal groove 44. A lower side of the collection path 57 communicates with the collection connection port 58 which is provided on a lower-side outer peripheral surface of the flange portion 43.

A seal member 46 is disposed between an outer peripheral side of the seal block 40 and an inner peripheral side of the crosshead 151, and thus, the lubricant is prevented from leaking from a gap between an end surface of the crosshead 151 and a seal block 40.

### <Operation of Lubricant>

A flow of the lubricant will be described. As shown by arrows A1, the lubricant supplied from the supply connection port 50 flows the first supply path 51 and the second supply path 52 and is supplied to the supply path opening portion 53 formed on the inner peripheral surface of the bush 30. In addition, the lubricant which has flowed out from the supply path opening portion 53 is supplied from the supply path opening portion 53 to the bearing gap 54 to lubricate the sliding surface. In addition, the lubricant which has lubricated the sliding surface flows to both outer sides of the guide bar 20 in the axial direction by a forward or rearward movement of the crosshead 151 and flows into the bearing gaps 55. In addition, the lubricant is sequentially supplied from the supply connection port 50 to be pushed out, and thus, the lubricant flows to both outer sides of the guide bar 20 in the axial direction and flows into the bearing gaps 55.

Fig. 6 is a perspective sectional view explaining a flow of the lubricant in a lubrication structure between the bush 30 of the crosshead 151 and the guide bar 20 in the injection molding machine 10 according to the first embodiment. Here, as shown in Fig. 6, in a case where the crosshead 151 moves in a direction of an arrow B, the lubricant in the bearing gaps 54 and 55 flows in a direction shown by an arrow A2 opposite to the arrow B. Since the gap is sealed by the seal ring 45, the lubricant flowing in the direction of the arrow A2 flows into the collection groove 56 formed on a front side of the seal ring 45.

The lubricant which has flowed into the collection groove 56 flows downward as shown by an arrow A3 and flows into the collection path 57 formed on a lower end portion of the ring-shaped collection groove 56 as shown by an arrow A4. In addition, the lubricant is collected in an external lubricant tank (not shown) or the like through a pipe connected to the collection connection port 58. Moreover, as a method of collecting the lubricant which has flowed into the collection groove 56, the lubricant may be dropped by own weight so as to be collected or may be sucked by a suction mechanism.

Hereinbefore, according to the injection molding machine 10 according to the first embodiment, in the lubrication structure of the sliding surfaces of the crosshead 151 and the guide bar 20, the seal blocks 40 having the seal ring 45 are disposed on both end surfaces of the guide portion 151c of the crosshead 151, and thus, it is possible to prevent the lubricant in the bearing gap from flowing to an outer space. Accordingly, it is possible to prevent scattering or sagging of the lubricant when the crosshead 151 moves forward or rearward, and cleaning and maintenance properties of the injection molding machine 10 are improved. Moreover, it is possible to prevent the lubricant from adhering to a molding product.

Moreover, the used lubricant is collected around both axial ends sealed by the seal rings 45 according to the forward or rearward movement of the crosshead 151. Meanwhile, in the lubrication structure of the injection molding machine 10 according to the first embodiment, it is possible to effectively collect the used lubricant by providing the collection grooves 56 on both ends.

In order to exchange the seal ring 45, it is necessary to remove the guide bar 20 from the toggle support 130. For this purpose, it is necessary to remove the toggle support 130 from the mold clamping unit 100, and thus, it is preferable that an exchange frequency of the seal ring 45 is small. Here, foreign matters such as metal powder are generated due to wear of the bush 30, and as an amount of foreign matters contained in the lubricant in the bearing gap increases, foreign matters passing through a portion between the guide bar 20 and the seal surface 45a of the seal ring 45 also increase. Accordingly, the wear of the seal surface 45a of the seal ring 45 is promoted, and there is a concern that a lifespan of the seal ring 45 decreases.

Meanwhile, in the lubrication structure of the injection molding machine 10 according to the first embodiment, the lubricant is supplied from the supply path opening portion 53 to the bearing gaps 54 and 55 and collected via the collection groove 56. Accordingly, even if the foreign matters such as metal powder are generated due to the wear of the bush 30, the foreign matters can flow from the collection groove 56 to the collection path 57 together with the lubricant, and thus, it is possible to reduce the amount of the foreign matters contained in the lubricant in the bearing gaps 54 and 55. As a result, the wear of the seal surface 45a of the seal ring 45 can be suppressed, and the exchange frequency of the seal ring 45 can be reduced.

Moreover, in the lubrication structure of the injection molding machine 10 according to the first embodiment, when the lubricant flows through the collection groove 56, the lubricant containing the foreign matters flows to the side surface 45b of the seal ring 45. However, the side surface 45b is a surface forming the collection groove 56 and is not a surface which slides on other surfaces. Accordingly, even when the lubricant containing the foreign matters flow to the side surface 45b of the seal ring 45, influences on deterioration of sealing properties of the seal ring 45 are small.

In addition, in the lubrication structure of the injection molding machine 10 according to the first embodiment, the lubricant can be collected in the external lubricant tank (not shown) through the pipe connected to the collection connection port 58, and thus, the collected lubricant may be reused. Therefore, even when an expensive lubricant is used, it is possible to reduce a running cost.

### <<Second Embodiment>>

Next, an injection molding machine according to a second embodiment will be described. Moreover, the injection molding machine according to the second embodiment is different from the injection molding machine according to the first embodiment in the lubrication structure in the sliding surfaces of the crosshead 151 and the guide bar 20. Other configurations are the same as each other, and overlapping descriptions thereof are omitted.

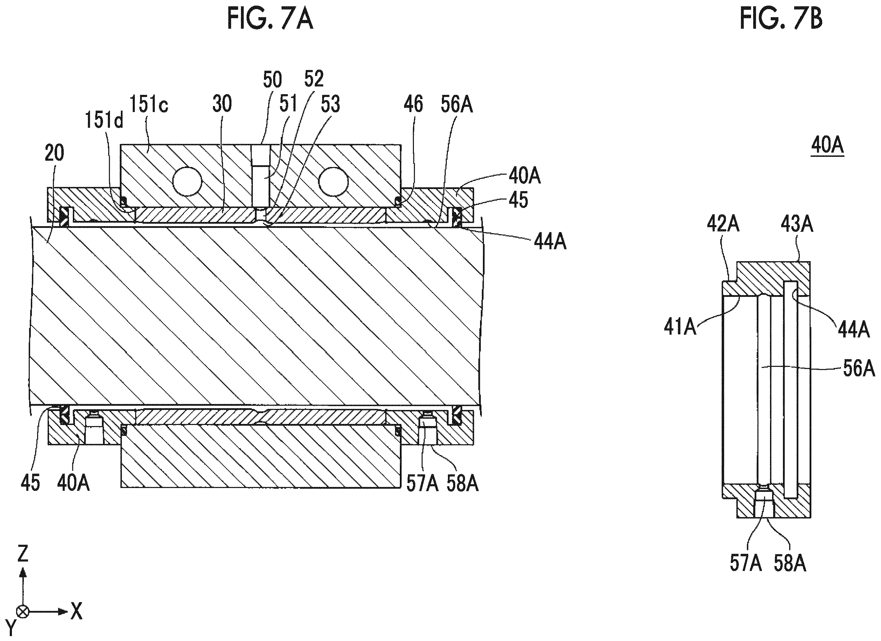

The lubrication structure in the sliding surfaces of the crosshead 151 and the guide bar 20 will be described with reference to Figs. 7A and 7B. Fig. 7A is a vertical sectional view around the crosshead 151 and the guide bar 20 in the injection molding machine 10 according to the second embodiment. Fig. 7B is a sectional view of a seal block 40A.

The lubrication structure of the second embodiment shown in Figs. 7A and 7B is different from the lubrication structure of the first embodiment shown in Figs. 5A and 5B in the configuration of the seal block 40A. That is, in the seal block 40 of the first embodiment, a portion (the seal ring 45 is disposed in the remainder) of the inside of the seal groove 44 is the collection groove 56 while in the seal block 40A of the second embodiment, a collection groove 56A is separately provided from the seal groove 44A.

As shown in Fig. 7B, the seal block 40A has an insertion hole 41A into which the guide bar 20 is inserted, an insertion portion 42A, a flange portion 43A, the seal groove 44A, the collection groove 56A, a collection path 57A, and a collection connection port 58A.

The collection groove 56A is a ring-shaped concave groove which is provided on an inner peripheral surface of the insertion hole 41A, and is provided on the insertion portion 42A side from the seal groove 44A, that is, a side close to the supply path opening portion 53. Accordingly, when viewed in the axial direction of the guide bar 20, the seal ring 45, the collection groove 56A, the bearing gap 54, the supply path opening portion 53, the bearing gap 54, the collection groove 56A, and the seal ring 45 are disposed in this order. One end of the collection path 57A communicates with the collection groove 56A and the other end thereof communicates with the collection connection port 58.

Hereinbefore, according to the injection molding machine 10 of the second embodiment, in the lubrication structure in the sliding surfaces of the crosshead 151 and the guide bar 20, by disposing the seal block 40A, similarly to the lubrication structure of the first embodiment, it is possible to prevent the lubricant in the bearing gap from flowing to the outer space. Accordingly, it is possible to prevent the scattering or sagging of the lubricant when the crosshead 151 moves forward or rearward, and cleaning and maintenance properties of the injection molding machine 10 are improved. Moreover, it is possible to prevent the lubricant from adhering to a molding product. In addition, the collection grooves 56A are provided on both end sides close to the seal rings 45, and thus, when the crosshead 151 moves forward or rearward, it is possible to effectively collect the used lubricant. Moreover, the lubricant is supplied from the supply path opening portion 53 to the bearing gaps 54 and 55 and is collected via the collection groove 56A. Accordingly, the foreign matters such as metal powder generated by the wear of the bush 30 can flow from the collection groove 56A to the collection path 57A together with the lubricant, and thus, the wear of the sealing ring 45a of the seal ring 45 is suppressed, and the exchange frequency of the seal ring 45 can be reduced. In addition, it is possible to reduce the running cost by reusing the collected lubricant.

Hereinafter, the lubrication structure of the first embodiment and the lubrication structure of the second embodiment will be compared with each other.

Compared to the lubrication structure of the second embodiment, the collection groove 56 can be formed at the position closer to the seal ring 45 in the lubrication structure of the first embodiment. Therefore, in terms of efficiently collecting the used lubricant, the lubrication structure of the first embodiment is more preferable. In addition, in the lubrication structure of the second embodiment, since the seal groove 44A and the collection groove 56A are separately provided from each other, the flange portion 43A is thick. Therefore, the injection molding machine having the lubrication structure of the first embodiment is preferable in that the machine can be downsized as compared with the injection molding machine having the lubrication structure of the second embodiment.

Meanwhile, in the lubrication structure of the first embodiment, the collection groove 56 through which the lubricant flows is formed on the side surface of the seal ring 45, while in the lubrication structure of the second embodiment, the flow of the lubricant is not formed on the side surface of the seal ring 45. Therefore, regarding the wear of the side surface of the seal ring 45, the lubrication structure of the second embodiment is preferable to the lubrication structure of the first embodiment. In addition, when the lubrication structure of the second embodiment and the lubrication structure of the first embodiment are compared with each other, the seal block 40A of the second embodiment is preferable to the seal block 40 of the first embodiment in terms of processing.

### <<Third Embodiment>>

Next, an injection molding machine according to a third embodiment will be described. Moreover, the injection molding machine according to the third embodiment is different from the injection molding machines according to the first and second embodiments in the lubrication structure in the sliding surfaces of the crosshead 151 and the guide bar 20. Other configurations are the same as each other, and overlapping descriptions thereof are omitted.

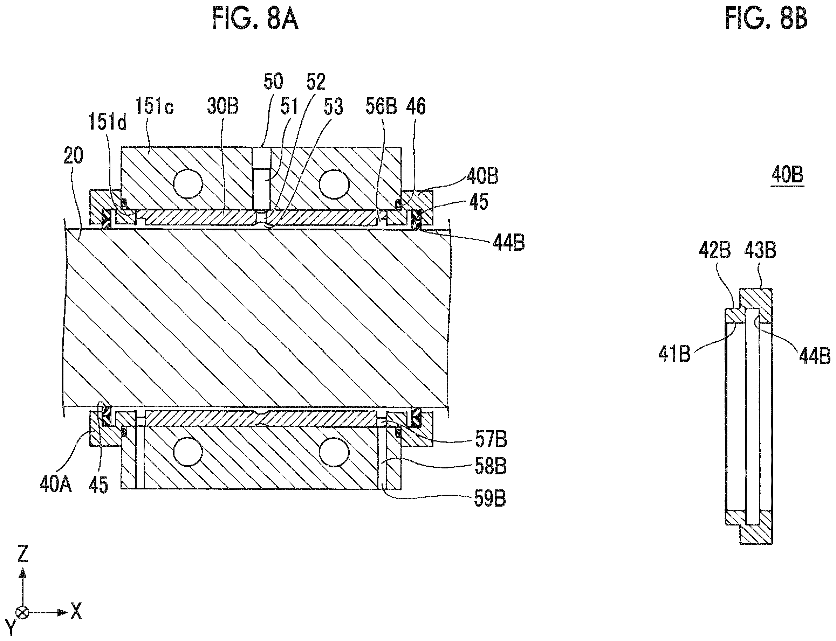

The lubrication structure in the sliding surfaces of the crosshead 151 and the guide bar 20 will be described with reference to Figs. 8A and 8B. Fig. 8A is a vertical sectional view around the crosshead 151 and the guide bar 20 in the injection molding machine 10 according to the third embodiment. Fig. 8B is a sectional view of a seal block 40B.

While the collection grooves 56 and 56A are provided in the seal blocks 40 and 40A in the lubrication structure of the first embodiment shown in Figs. 5A and 5B and the lubrication structure of the second embodiment shown in Figs. 7A and 7B, a collection groove is provided on a bush 30B side in the lubrication structure of the third embodiment shown Figs. 8A and 8B.

As shown in Fig. 8A, a ring-shaped notch is formed on an opening end portion of the bearing hole of the bush 30B, and a collection groove 56B which is a ring-shaped concave groove is formed on an end surface of the insertion portion 42B of the seal block 40B. Accordingly, when viewed in an axial direction of the guide bar 20, the seal ring 45, the collection groove 56B, the bearing gap 54, the supply path opening portion 53, the bearing gap 54, the collection groove 56B, and the seal ring 45 are disposed in this order. In addition, in the bush 30B, a first collection path 57B which communicates with the collection groove 56B is formed. Moreover, a second collection path 58B is provided in the guide portion 151c, and communicates with a collection connection port 59B provided on a lower-side outer peripheral surface of the guide portion 151c.

In addition, as shown in Fig. 8B, the seal block 40B includes an insertion hole 41B into which the guide bar 20 is inserted, an insertion portion 42B, a flange portion 43B, and a seal groove 44B.

Hereinbefore, according to the injection molding machine 10 of the third embodiment, in the lubrication structure of the sliding surfaces of the crosshead 151 and the guide bar 20, by disposing the seal block 40B, similarly to the lubrication structures of the first and second embodiments, it is possible to prevent the lubricant in the bearing gap from flowing to the outer space. Accordingly, it is possible to prevent the scattering or sagging of the lubricant when the crosshead 151 moves forward or rearward, and cleaning and maintenance properties of the injection molding machine 10 are improved. Moreover, it is possible to prevent the lubricant from adhering to a molding product. In addition, the collection grooves 56B are provided on both end sides close to the seal rings 45, and thus, when the crosshead 151 moves forward or rearward, it is possible to effectively collect the used lubricant. Moreover, the lubricant is supplied from the supply path opening portion 53 to the bearing gaps 54 and 55 and is collected via the collection groove 56B. Accordingly, the foreign matters such as metal powder generated by the wear of the bush 30 can flow from the collection groove 56B to the collection paths 57B and 58B together with the lubricant, and thus, the wear of the sealing ring 45a of the seal ring 45 is suppressed, and the exchange frequency of the seal ring 45 can be reduced. In addition, it is possible to reduce the running cost by reusing the collected lubricant.

Hereinafter, the lubrication structure of the first and second embodiments and the lubrication structure of the third embodiment will be compared with each other.

Compared to the lubrication structure of the third embodiment, the collection groove 56 can be formed at the position closer to the seal ring 45 in the lubrication structures of the first and second embodiments. Therefore, in terms of efficiently collecting the used lubricant, the lubrication structures of the first and second embodiments are more preferable.

Meanwhile, in the lubrication structure of the third embodiment, the collection groove 56B is provided on the bush 30B side, and thus, the flange portion 43B can be thinned. Accordingly, the injection molding machine having the lubrication structure of the third embodiment is preferable in that the machine can be downsized as compared with the injection molding machines having the lubrication structures of the first and second embodiments.

### <<Fourth Embodiment>>

Next, an injection molding machine according to a fourth embodiment will be described. Moreover, in the injectionmolding machines 10 according to the first to third embodiments, the lubrication structure in the sliding surface between the crosshead 151 and the guide bar 20 provided in the mold clamping unit 100 is described. However, in the injection molding machines 10 according to the fourth embodiment, the above-described lubrication structure is applied to the lubrication structure in the sliding surface between a crosshead 240 and a guide bar 20C provided in the ejector unit 200.

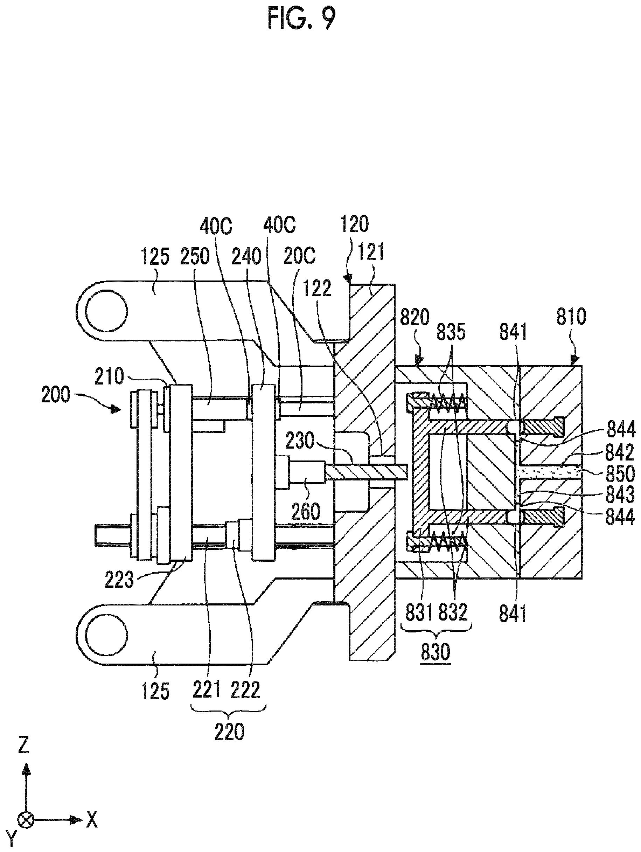

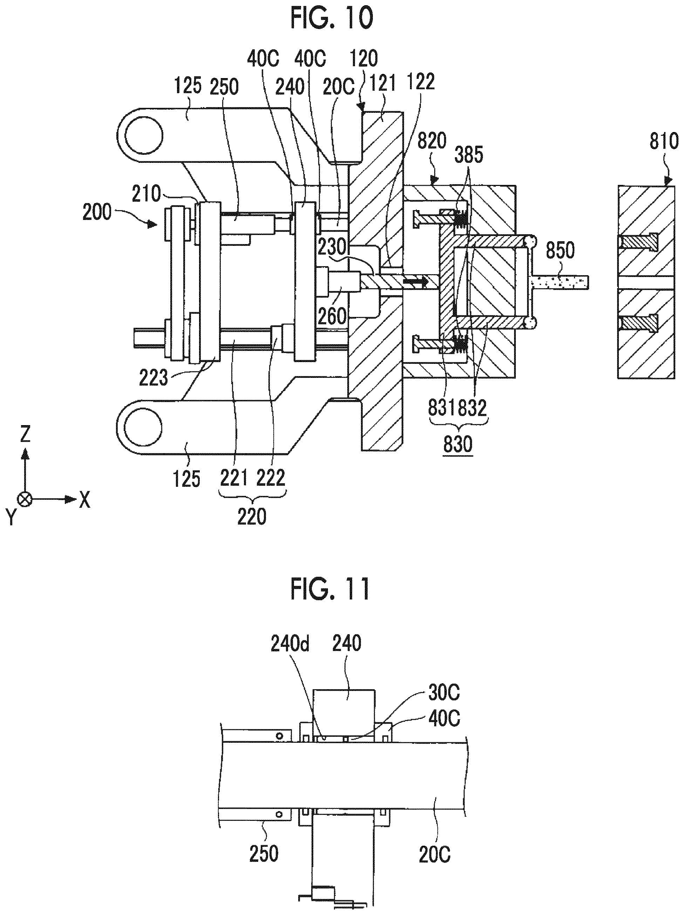

An operation of the crosshead 240 provided in the ejector unit 200 will be described with reference to Figs. 9 and 10. Fig. 9 is a view showing a state when the ejector unit 200 is standby. Fig. 10 is a view showing a state when the moldingproduct of the ejector unit 200 is ejected.

The ejector unit 200 is attached to the movable platen 120. The movable platen 120 includes a movable platen main body portion 121 to which the movable mold 820 is attached and a movable platen link attachment portion 125 to which an oscillating shaft of the first link 152 is attached. The movable platen main body portion 121 and the movable platen link attachment portion 125 are integrally formed with each other by casting or the like.

The movable platen main body portion 121 has a plate-shaped portion which is formed in an approximately rectangular shape when viewed in mold opening and closing directions. Notches may be formed along the tie bars 140 at four corner portions of the plate-shaped portion. Instead of the notch, a through-hole into which the tie bar 140 is inserted may be formed. The plate-shaped portion has a through-hole 122, into which the ejector rod 230 is inserted, at a center portion of the plate-shaped portion.

Moreover, the movable platen main body portion 121 may further have a tubular portion which protrudes rearward from an outer peripheral edge portion of the plate-shaped portion in addition to the plate-shaped portion. The tubular portion is formed in a rectangular frame shape when viewed in the mold opening and closing directions and a space in which at least a portion of the ejector unit 200 is accommodated is formed inside the tubular portion.

For example, a pair of upper and lower movable platen link attachment portions 125 is provided on a surface (rear surface) of the movable platen main body portion 121 facing the toggle support 130. In addition, a through-hole is formed in a distal end portion of each movable platen link attachment portion 125, the oscillating shaft is inserted into the through-hole, and thus, the first link 152 is oscillatingly attached to the movable platen link attachment portion 125 via the oscillating shaft.

As shown in Figs. 9 and 10, for example, the ejector unit 200 includes the ejector motor 210, a motion conversion mechanism 220, the ejector rod 230, the crosshead 240, a coupling 260, or the like.

The ejector motor 210 is fixed to the movable platen 120. A rotary motion of the ejector motor 210 is transmitted to the motion conversion mechanism 220 via a belt or pulley. However, the rotary motion may be directly transmitted to the motion conversion mechanism 220.

The motion conversion mechanism 220 converts the rotary motion of the ejector motor 210 into a linear motion of the crosshead 240. The linear motion of the crosshead 240 is transmitted to the ejector rod 230 via the coupling 260.

The motion conversion mechanism 220 has a screw shaft 221 and a screw nut 222 which is screwed to the screw shaft 221. A ball or a roller may be interposed between the screw shaft 221 and the screw nut 222. An attachment plate 223 is provided behind the movable platen main body portion 121 with a predetermined gap from the movable platen main body portion 121. The screw shaft 221 penetrates the attachment plate 223 and is rotatably and unmovable forward or rearward held by the attachment plate 223 and the movable platen 120. The screw nut 222 is fixed to the crosshead 240.

If the ejector motor 210 is driven to rotate the screw shaft 221, the screw nut 222 and the crosshead 240 move forward or rearward. In addition, the disposition of the screw shaft 221 or the screw nut 222 is not particularly limited. For example, the screw nut 222 maybe rotatably and unmovable forward or rearward held by the attachment plate 223 and the screw nut 222 may be fixed to the crosshead 240. In this case, if the ejector motor 210 is driven to rotate the screw nut 222, the screw shaft 221 or the crosshead 240 moves forward or rearward.

The crosshead 240 is movable forward or rearward along a guide bar 20C bridged between the attachment plate 223 and the movable platen main body portion 121. A plurality of the guide bars 20C may be provided in order to prevent the rotation of the crosshead 240. Inaddition, the guide bar 20C may be supported by any one of the attachment plate 223 and the movable platen main body portion 121 in a cantilever manner.

Moreover, seal blocks 40C are disposed on both end surfaces of the crosshead 240 through which the guide bar 20C passes. Moreover, a stopper 250 is provided on a rear side of the guide bar 20C.

The ejector rod 230 is movable forward or rearward in the through-hole 122 penetrating the movable platen 120 (more specifically, the movable platen main body portion 121) in a forward-rearward direction, and thus, the ejector rod 230 moves forward or rearward according to the forward or rearward movement of the crosshead 240. In Figs. 9 and 10, one ejector rod 230 is provided. However, a plurality of ejector rods 230 may be provided.

A front end portion of the ejector rod 230 comes into contact with the movable member 830 which is disposed to be movable forward or rearward inside the movable mold 820. The front end portion of the ejector rod 230 is not connected to the movable member 830. However, the front end portion may be connected to the movable member 830. In addition, in a case where the front end portion of the ejector rod 230 is connected to the movable member 830, a spring 835 may not be provided.

If the ejector motor 210 is driven to move the ejector rod 230 forward, the movable member 830 moves forward, and thus, the molding product is ejected from the movable mold 820. Thereafter, if the ejector rod 230 is driven to move the ejector rod 230 rearward, the movable member 830 is moved rearward to an original state while abutting against the ejector rod 230 by an elastic restoring force of the spring 835.

The mold unit 800 includes a stationary mold 810 which is attached to a stationary platen 110 and the movable mold 820 which is attached to the movable platen 120. As shown in Fig. 9, a cavity space 841 is formed between the stationary mold 810 and the movable mold 820 when the mold is clamped. A molding material 850 reaches the cavity space 841 via a sprue 842 which is formed in the stationary mold 810, a runner 843 which branches at a terminal end of the sprue 842, and a gate 844 provided at a terminal end of the runner 843.

The mold unit 800 has the movable member 830 which is disposed to be movable forward or rearward inside the movable mold 820. The movable member 830 has a plate-shaped ejector plate 831 perpendicular to the forward-rearward direction and a rod-like ejector pin 832 extending forward from the ejector plate 831.

The ejector plate 831 is pushed forward by the ejector rod 230 which is disposed behind the ejector plate 831. Moreover, the ejector plate 831 is pushed rearward by the spring 835 which is disposed in front of the ejector plate 831.

The ejector pin 832 extends forward from the ejector plate 831 and penetrates the movable mold 820. As shown in Fig. 9, the molding material 850 flowing through the runner 843 adheres to the front end portion of the ejector pin 832 and is solidified. The ejector pin 832 is used so as to eject the molding material 850 solidified by the runner 843.

Fig. 11 is a sectional view showing a periphery of the crosshead 240 in the ejector unit 200 provided in the injection molding machine 10 according to the fourth embodiment.

The crosshead 240 of the ejector unit 200 is moved forward or rearward by the ejector motor 210 and the motion conversion mechanism 220. A guide hole 240d is formed in the crosshead 240. A bush 30C is press-fitted to the guide hole 240d. The guide bar 20C is inserted into the bearing hole of the bush 30C, and thus, an inner peripheral surface of the bush 30C and a circumferential surface of the guide bar 20C become sliding surfaces. The seal blocks 40C having a seal ring is disposed on both end surfaces of the guide portion of the crosshead 240.

As the lubrication structure in the sliding surfaces of the crosshead 240 and the guide bar 20C, the lubrication structure in the sliding surfaces of the crosshead 151 and the guide bar 20 of the first embodiment shown in Figs. 5A and 5B can be applied. In addition, the lubrication structure of the second embodiment shown in Figs. 7A and 7B may be applied, and the lubrication structure of the third embodiment shown in Figs. 8A and 8B may be applied.

Hereinbefore, according to the injection molding machine 10 of the fourth embodiment, in the lubrication structure in the sliding surfaces of the crosshead 240 and the guide bar 20C in the ejector unit 200, by disposing the seal block 40C, it is possible to prevent the lubricant in the bearing gap from flowing to the outer space. Accordingly, it is possible to prevent the scattering or sagging of the lubricant when the crosshead 240 moves forward or rearward, and cleaning and maintenance properties of the injection molding machine 10 are improved. Moreover, it is possible to prevent the lubricant from adhering to a molding product. In addition, it is possible to effectively collect the used lubricant when the crosshead 240 moves forward or rearward. Moreover, the lubricant is supplied from a supply path to the bearing gap and is collected via the collection groove. Accordingly, the foreign matters such as metal powder generated by the wear of the bush 30C can flow from the collection groove to the collection path together with the lubricant, and thus, the wear of the sealing ring of the seal ring is suppressed, and the exchange frequency of the seal ring can be reduced. In addition, it is possible to reduce the running cost by reusing the collected lubricant.

In addition, the ejector unit 200 has the stopper 250 which restricts the movement of the crosshead 240. However, it is possible to adjust a movable region, which is reduced by a thickness of the seal block 40C, by shortening a length of the stopper 250.

### <<Modification Example>>

Hereinbefore, although the embodiments of the injection molding machine or the like are described, the present invention is not limited to the above-described embodiments or the like, and various modifications and improvements can be made within the scope of the present invention described in claims of the present invention.

In the lubrication structures of the first to third embodiments, the lubricant is supplied from a vicinity of the center of the bush 30 when viewed in the axial direction and is collected by the collection grooves 56 formed in front of both outer-side seal rings 45. However, the present invention is not limited to this, the lubricant is supplied from both outer sides, and the concave groove 52b may be set to the collection groove such that the lubricant is collected from the inside. In addition, preferably, the supply path is provided above the guide bar 20 and the collection path is provided below the guide bar 20.

Moreover, in the lubrication structure of the third embodiment, the collection groove 56B is formed by the opening end portion of the bush 30B and the end surface of the insertion portion 42B of the seal block 40B. However, the present invention is not limited to this. For example, a ring-shaped concave groove may be formed on the inner peripheral surface of the bush 30B. However, in the lubrication structure of the third embodiment, the collection groove 56B can be formed on both outer sides, in other words, can be formed to be closer to the seal ring 45. Accordingly, like the lubrication structure of the third embodiment, it is preferable that the collection groove 56B is formed on the opening end portion of the bush 30B.

Moreover, in the lubrication structures of the first to third embodiments, the supply and the collection of the lubricant is performed. However, the present invention is not limited to this. For example, the lubricant may be initially sealed in the bearing gap and the end surface may be closed by the seal block 40. In this configuration, it is possible to prevent the lubricant supplied to the bearing gap from flowing to the outer space, and thus, cleaning and maintenance properties of the injection molding machine 10 are improved. Moreover, it is possible to prevent the lubricant from adhering to a molding product.

Moreover, the seal ring 45 is disposed in the seal groove 44 of the seal block 40. However, the present invention is not limited to this. For example, the guide bar 20 may be inserted into the bearing hole of the bush 30, the seal groove may be provided on the inner peripheral surface of the bearing hole of the bush 30, and the seal ring may be disposed in the seal groove. According to the present configuration, it is possible to seal the gap between the inner peripheral surface of the bearing hole of the bush 30 and the outer peripheral surface of the guide bar 20 without requiring the seal block, and leakage of the lubricant can be prevented. Moreover, the supply path through which the lubricant is supplied may be provided in the bearing gap which is provided between the guide bar 20 and the bush 30 and has both axial sides closed by the seal ring. Moreover, on the inner peripheral surface of the bearing hole of the bush 30, a collection groove which is a ring-shaped concave groove may be provided on the inside in the axial direction from the seal groove, and a collection path communicating with collection groove may be provided. According to the present configuration, the used lubricant can be collected through the collection groove and can be discharged from the collection path, and thus, it is possible to prevent the leakage of the lubricant.

### Brief Description of the Reference Symbols

10: injection molding machine
20, 20C: guide bar
30, 30B, 30C: bush
40, 40A, 40B, 40C: seal block
41: insertion hole
42: insertion portion
43: flange portion
44: seal groove
45: seal ring (seal member)
46: seal member
50: supply connection port
51: first supply path
52: second supply path
53: supply path opening portion
54: bearing gap
55: bearing gap
56: collection groove
57: collection path
58: collection connection port
150: toggle mechanism
151, 240: crosshead
151c: guide portion
151d, 240d: guide hole
170, 220: motion conversion mechanism (linear motion mechanism)

## Claims

1. An injection molding machine (10), comprising:
a crosshead (151) which is driven by a linear motion mechanism (170);
a bush (30) which is disposed in a guide hole (151d) provided in a guide portion (151c) of the crosshead (151);
a guide bar (20) which is inserted into a bearing hole of the bush (30) and guides a linear motion of the crosshead (151) ;
seal blocks (40) which have an insertion hole (41) into which the guide bar (20) is inserted and are disposed on both end surfaces of the guide portion (151c);
a seal member (45) which is disposed in a seal groove (44) formed on an inner peripheral surface of the insertion hole (41) of the seal blocks (40) and seals a gap between the inner peripheral surface of the insertion hole (41) of the seal block (40) and an outer peripheral surface of the guide bar (20);
a supply path (51, 52) through which a lubricant is supplied to a bearing gap (54, 55) which is a gap between the bush (30) and the guide bar (20);
a collection groove (56) which communicates with the bearing gap (54, 55); and
a collection path (57) which communicates with the collection groove (56).

2. The injection molding machine according to claim 1,
wherein the collection grooves (56) are disposed on both outer sides of a supply path opening portion (53) which is an opening portion of the supply path (51, 52) on the bearing gap (54, 55) side in an axial direction of the guide bar (20).

3. The injection molding machine according to claim 1 or 2,
wherein the collection path (57) is formed in the seal block.

4. The injection molding machine according to claim 3,
wherein a portion of the seal groove (44) is the collection groove (56), and the collection path (57) communicates with the seal groove (44).

5. The injection molding machine according to claim 1 or 2,
wherein the collection path (57) is formed in the bush (30) and the guide portion (151c).

6. An injection molding machine, comprising:
a crosshead which is driven by a linear motion mechanism;
a bush which is disposed in a guide hole provided in a guide portion (151c) of the crosshead;
a guide bar which is inserted into a bearing hole of the bush and guides a linear motion of the crosshead;
a seal member (45) which is disposed in a seal groove (44) formed on an inner peripheral surface of the bearing hole of the bush and seals a gap between the inner peripheral surface of the bearing hole of the bush and an outer peripheral surface of the guide bar;
a supply path (51, 52) through which a lubricant is supplied to a bearing gap (54, 55) which is a gap between the bush (30) and the guide bar (20);
a collection groove (56) which communicates with the bearing gap (54, 55); and
a collection path (57) which communicates with the collection groove (56).

## Patentansprüche

1. Spritzgießmaschine (10), umfassend:
einen Kreuzkopf (151), der mittels eines Linearbewegungsmechanismus (17) angetrieben wird;
eine Buchse (30), die in einer in einem Führungsabschnitt (151c) des Kreuzkopfs (151) vorgesehenen Führungsbohrung (151d) angeordnet ist,
eine Führungsstange (20), die in einer Lagerbohrung der Buchse (30) eingeführt ist und eine Linearbewegung des Kreuzkopfs (151) führt;
Dichtungsblöcke (40), die eine Einführungsbohrung (41) aufweisen, in die die Führungsstange (20) eingeführt wird, und die an beiden Endflächen des Führungsabschnitts (151c) angeordnet sind;
ein Dichtungselement (45), das in einer Dichtungsnut (44) angeordnet ist, die an einer Innenumfangsfläche der Einführungsbohrung (41) der Dichtungsblöcke (40) gebildet ist und einen Spalt zwischen der Innenumfangsfläche der Einführungsbohrung (41) des Dichtungsblocks (40) und einer Außenumfangsfläche der Führungsstange (20) abdichtet;
einen Zuführweg (51, 52), durch den ein Schmiermittel an einen Lagerspalt (54, 55), der ein Spalt zwischen der Buchse (30) und der Führungsstange (20) ist, zugeführt wird;
eine Auffangrinne (56), die mit dem Lagerspalt (54, 55) kommuniziert; und
einen Sammelweg (57), der mit der Auffangrinne (56) kommuniziert.

2. Spritzgießmaschine nach Anspruch 1,
wobei die Auffangrinnen (56) an beiden Außenseiten eines Zuführwegöffnungsabschnitts (53), der ein Öffnungsabschnitt des Zuführwegs (51, 52) auf der Seite des Lagerspalts (54, 55) in einer Axialrichtung der Führungsstange (20) ist, angeordnet sind.

3. Spritzgießmaschine nach Anspruch 1 oder 2,
wobei der Sammelweg (57) in dem Dichtungsblock gebildet ist.

4. Spritzgießmaschine nach Anspruch 3,
wobei ein Teil der Dichtungsnut (44) die Auffangrinne (56) ist, und der Sammelweg (57) mit der Dichtungsnut (44) kommuniziert.

5. Spritzgießmaschine nach Anspruch 1 oder 2,
wobei der Sammelweg (57) in der Buchse (30) und dem Führungsabschnitt (151c) gebildet ist.

6. Spritzgießmaschine, umfassend:
einen Kreuzkopf, der durch einen Linearbewegungsmechanismus angetrieben wird;
eine Buchse, die in einer in einem Führungsabschnitt (151c) des Kreuzkopfs vorgesehenen Führungsbohrung angeordnet ist;
eine Führungsstange, die in eine Lagerbohrung der Buchse eingeführt ist und eine Linearbewegung des Kreuzkopfs führt;
ein Dichtungselement (45), das in einer Dichtungsnut (44) angeordnet ist, die an einer Innenumfangsfläche der Lagerbohrung der Buchse gebildet ist und einen Spalt zwischen der Innenumfangsfläche der Lagerbohrung der Buchse und einer Außenumfangsfläche der Führungsstange abdichtet;
einen Zuführweg (51, 52), durch den ein Schmiermittel an einen Lagerspalt (54, 55) zugeführt wird, der ein Spalt zwischen der Buchse (30) und der Führungsstange (20) ist;
eine Auffangrinne (56), die mit dem Lagerspalt (54, 55) kommuniziert; und
einen Sammelweg (57), der mit der Auffangrinne (56) kommuniziert.

## Revendications

1. Une machine de moulage par injection (10), comprenant :
un bossage de piston (151) qui est entraîné par un mécanisme de mouvement linéaire (170) ;
une chemise (30) qui est disposée dans un orifice de guidage (151d) prévu dans une partie de guidage (151c) du bossage de piston (151) ;
une barre de guidage (20) qui est insérée dans un alésage de palier de la chemise (30) et qui guide un mouvement linéaire du bossage de piston (151) ;
des blocs d'étanchéité (40) qui possèdent un orifice d'insertion (41) dans lequel la barre de guidage (20) est insérée et qui sont disposés sur les deux surfaces d'extrémité de la partie de guidage (151c) ;
un élément d'étanchéité (45) qui est disposé dans une rainure d'étanchéité (44) formée sur une surface périphérique interne de l'orifice d'insertion (41) des blocs d'étanchéité (40) et qui ferme un espace situé entre la surface périphérique interne de l'orifice d'insertion (41) du bloc d'étanchéité (40) et une surface périphérique externe de la barre de guidage (20) ;
un trajet d'alimentation (51, 52) par lequel un lubrifiant est fourni à un jeu de palier (54, 55) qui est un espace situé entre la chemise (30) et la barre de guidage (20) ;
une rainure de collecte (56) qui communique avec le jeu de palier (54, 55) ; et
un trajet de collecte (57) qui communique avec la rainure de collecte (56).

2. La machine de moulage par injection selon la revendication 1,
dans laquelle les rainures de collecte (56) sont disposées sur les deux côtés externes d'une partie d'ouverture de trajet d'alimentation (53) qui est une partie d'ouverture du trajet d'alimentation (51, 52) côté jeu de palier (54, 55) dans une direction axiale de la barre de guidage (20).

3. Machine de moulage par injection selon la revendication 1 ou 2, dans laquelle le trajet de collecte (57) est formé dans le bloc d'étanchéité.

4. La machine de moulage par injection selon la revendication 3,
dans laquelle une partie de la rainure d'étanchéité (44) est la rainure de collecte (56), et le trajet de collecte (57) communique avec la rainure d'étanchéité (44).

5. La machine de moulage par injection selon la revendication 1 ou 2,
dans laquelle le trajet de collecte (57) est formé dans la chemise (30) et la partie de guidage (151c).

6. Une machine de moulage par injection, comprenant :
un bossage de piston qui est entraîné par un mécanisme de mouvement linéaire ;
une chemise qui est disposée dans un orifice de guidage prévu dans une partie de guidage (151c) du bossage de piston ;
une barre de guidage qui est insérée dans un alésage de palier de la chemise et qui guide un mouvement linéaire du bossage de piston ;
un élément d'étanchéité (45) qui est disposé dans une rainure d'étanchéité (44) formée sur une surface périphérique interne de l'alésage de palier de la chemise et qui ferme un espace situé entre la surface périphérique interne de l'alésage de pallier de la chemise et une surface périphérique externe de la barre de guidage ;
un trajet d'alimentation (51, 52) par lequel un lubrifiant est fourni à un jeu de palier (54, 55) qui est un espace situé entre la chemise (30) et la barre de guidage (20) ;
une rainure de collecte (56) qui communique avec le jeu de palier (54, 55) ; et
un trajet de collecte (57) qui communique avec la rainure de collecte (56).
